(19) **Europäisches Patentamt / European Patent Office / Office européen des brevets**

(11) **EP 1 167 948 B1**

(12) # FASCICULE DE BREVET EUROPEEN

(45) Date de publication et mention
de la délivrance du brevet:
**29.08.2007 Bulletin 2007/35**

(51) Int Cl.:
***G01N 15/08*** (2006.01)

(21) Numéro de dépôt: **01401514.3**

(22) Date de dépôt: **12.06.2001**

(54) **Méthode pour évaluer des paramètres physiques d'un gisement souterrain à partir de débris de roche qui y sont prélevés**

Verfahren zur Auswertung der physikalischen Parameter einer unterirdischen Lagerstätte, ausgehend von dort entnommenen Felsabfällen

Process for evaluating physical parameters of a subterranean reservoir starting from rock debris taken from said reservoir

(84) Etats contractants désignés:
**GB IT NL**

(30) Priorité: **23.06.2000 FR 0008059**

(43) Date de publication de la demande:
**02.01.2002 Bulletin 2002/01**

(73) Titulaire: **Institut Français du Pétrole
92852 Rueil-Malmaison Cedex (FR)**

(72) Inventeurs:
• **Lenormand, Roland
92500 Rueil-Malmaison (FR)**
• **Egermann, Patrick
Bâtiment K,
92500 Rueil Malmaison (FR)**

(56) Documents cités:
**FR-A- 2 772 483**

• **A.F.MARSALA ET AL.: "Transient method implemented under unsteady-state conditions for low and very low permeability measurements on cuttings" SPE/IRSM EUROCK '98, 8 juillet 1998 (1998-07-08), pages 33-39, XP000992311 Trondheim**
• **LENORMAD ET AL: "Can we really measure the relative permeabilities using the micropore membrane method ?" JOURNAL OF PETROLEUM SCIENCE AND ENGINEERING, vol. 19, no. 1-2, janvier 1998 (1998-01), pages 93-102, XP000991162 issn 0920-4105 Elsevier Science Amsterdam**

EP 1 167 948 B1

## Description

La présente invention concerne une méthode et un dispositif pour évaluer la perméabilité absolue d'une zone d'un réservoir souterrain d'hydrocarbures à partir d'échantillons de roche prélevés dans cette zone tels que des débris obtenus lors d'opérations de forage de puits.

Le contexte pétrolier actuel conduit les opérateurs à s'intéresser à de nouvelles zones (« offshore » profond) mais aussi à de nouveaux types de gisements (structures marginales situées à proximité d'installations de surface existantes). Compte tenu des coûts de forage liés à l'environnement difficile de ces nouvelles découvertes ou à la taille limitée de certaines structures, les opérateurs ne peuvent plus se permettre de forer des puits d'appréciation complémentaires sans risquer de compromettre la viabilité économique du projet. La stratégie de développement fixée avant le démarrage de l'exploitation est donc moins stricte de façon à pouvoir s'adapter "en temps réel" à la nature des informations collectées par le forage des puits de production. On parle de développement appréciatif.

Les mesures pétrophysiques jouent un rôle clé dans l'appréciation de la qualité d'un réservoir. Néanmoins, les délais associés à ce type de mesures sont souvent très longs et donc incompatibles avec la réactivité nécessaire à la réussite des développements appréciatifs. De nouveaux moyens d'évaluation plus rapides et moins coûteux sont donc recherchés comme support à la prise de décision.

Les débris de forage (« cuttings ») remontés par la boue, font depuis longtemps l'objet d'examens sur sites. Ils sont réalisés par les équipes chargés de l'analyse des boues (dites de « Mud Logging») et servent essentiellement à compléter la description des couches géologiques traversées au cours du forage réalisée à partir de diagraphies.

## ETAT DE LA TECHNIQUE

Des travaux ont déjà été réalisés pour essayer d'évaluer des propriétés pétrophysiques à partir de débris de forage. On a mesuré par exemple les propriétés acoustiques relativement à des ondes S et P. Différents paramètres ont également été étudiés tels que la dureté et la déformation des débris de roche ou leur porosité et perméabilité.

Suivant une première méthode connue pour réaliser la mesure de perméabilité, le morceau de roche est préalablement enrobé dans de la résine. On découpe une tranche de faible épaisseur dans la roche enrobée et on la place dans une cellule de mesure. Elle comporte des moyens pour y injecter un fluide sous pression à débit contrôlé et des moyens de mesure de la perte de charge créée par l'échantillon. Comme la résine est imperméable, la perméabilité absolue est déduite de l'équation de Darcy en tenant compte de la surface réelle occupée par les débris de roche.

Cette méthode est décrite par exemple par :

- Santarelli F.J., et al ; « Formation evaluation from logging on cuttings », SPERE, June 1998 ; ou

- Marsala A.F., et al ; «Transient Method Implemented under Unsteady State Conditions for Low and Very Low Permeability Measurements on Cuttings » ; SPE/ISRM n°47202, Trondheim, 8-10 July 1998.

Ce type de mesure ne s'obtient qu'en laboratoire après de longues opérations de conditionnement des débris.

Une autre méthode connue repose sur une mesure RMN (Résonance Magnétique Nucléaire) qui est faite directement sur les débris de forage après un lavage préalable suivi d'une saturation en saumure. Ce type de mesure fournit une valeur directement exploitable de la porosité. La perméabilité K est déterminée par l'intermédiaire de corrélations de même nature que celles utilisées dans le cadre des diagraphies RMN.

On trouve une illustration de cette méthode dans le document suivant :

- Nigh E., et al ; P-K™: Wellsite Determination of Porosity and Permeability Using Drilling Cuttings", CWLS Journal, Vol 13, n°1, Dec 1984.

Le document FR 2 772 483 A décrit une méthode de modélisation des déplacements de fluides dans un milieu poreux.

## LA METHODE ET LE DISPOSITIF SELON L'INVENTION

La méthode selon l'invention a pour objet d'évaluer des paramètres physiques tels que la perméabilité absolue de roches poreuses d'une zone d'un gisement souterrain à partir de fragments de roche (des débris de forage par exemple) prélevés dans cette zone.

La méthode comporte

- l'immersion des fragments dans un fluide visqueux contenu dans une enceinte de confinement ;

- une phase d'injection dans l'enceinte du fluide visqueux sous une pression croissante en fonction du temps, jusqu'à un seuil de pression définie, de manière à comprimer le gaz piégé dans les pores de la roche ;

- une phase de relaxation avec arrêt de l'injection ;

- la mesure de l'évolution de la pression dans l'enceinte au cours des deux phases d'injection et de relaxation ;

- une modélisation de l'évolution de la pression durant le processus d'injection et de relaxation, à partir de valeurs initiales choisies pour les paramètres physiques des fragments, et ;

- une étape d'ajustement itératif des valeurs des paramètres physiques des fragments de roche pour que l'évolution modélisée s'ajuste au mieux avec l'évolution mesurée de la pression dans l'enceinte.

Selon les cas, on peut charger la cellule de confinement avec des débris de forage envahis de fluides de forage ou bien préalablement nettoyés.

Le dispositif selon l'invention permet d'évaluer des paramètres physiques tels que la perméabilité absolue de roches poreuses d'une zone d'un gisement souterrain, à partir de fragments de roche prélevés dans cette zone. Il comporte essentiellement :

- une enceinte de confinement pour des fragments de roche poreuse ;

- des moyens d'injection d'un fluide visqueux dans l'enceinte pour remplir l'enceinte contenant les fragments de roche, dans un premier temps, et pour réaliser un cycle comprenant une phase d'injection dans l'enceinte de fluide sous une pression croissante en fonction du temps (de préférence à débit constant pour faciliter la mesure du volume du fluide injecté), jusqu'à un seuil de pression défini, dans un deuxième temps, de manière à comprimer le gaz piégé dans les pores de la roche, et une phase de relaxation avec arrêt de l'injection ;

- des moyens pour la mesure de l'évolution de la pression dans l'enceinte au cours des deux phases d'injection et de relaxation ; et

- un système de traitement pour modéliser l'évolution de la pression durant le processus d'injection et de relaxation, à partir de valeurs initiales choisies pour les paramètres physiques des fragments de roche, et pour ajuster itérativement les valeurs à donner à ces paramètres physiques pour que l'évolution modélisée de la pression s'ajuste au mieux avec l'évolution mesurée de la pression dans l'enceinte.

Les moyens d'injection comportent par exemple une pompe injectant de l'eau à débit constant dans un réservoir tampon rempli d'huile à forte viscosité communiquant par des vannes avec l'enceinte de confinement.

La méthode se révèle satisfaisante pour des roches de perméabilités très différentes allant de quelques milli-Darcy à quelques centaines de milliDarcy. Compte tenu de la faible place occupée par le dispositif de mise en oeuvre mais aussi de la rapidité avec laquelle il est possible de réaliser les mesures et le calage entre les données théoriques et les données expérimentales, la méthode se prête particulièrement bien aux conditions de chantier. Il est donc tout à fait possible d'envisager une mesure et une interprétation directement sur site dans un délai très court, sans commune mesure par conséquent avec ceux qui sont nécessaires pour obtenir des résultats équivalents par les méthodes de laboratoire. Cela ouvre des perspectives importantes au niveau de la caractérisation puisque l'on peut tirer partie de cette nouvelle source d'information comme support à l'interprétation des diagraphies électriques et affiner l'évaluation d'un puits en terme de potentiel de production

**PRESENTATION SOMMAIRE DES FIGURES**

D'autres caractéristiques et avantages de la méthode et du dispositif selon l'invention, apparaîtront à la lecture de la description ci-après d'exemples non limitatif de réalisation, en se référant aux dessins annexés où :

- la Fig. 1 montre schématiquement le dispositif ;

- la Fig.2 montre schématiquement la structure d'un débris ou particule de roche poreuse dans lequel on modélise les effets de 1' injection d'un fluide à forte viscosité tel que de l'huile ;

- les Fig.3a à 3c montrent schématiquement les courbes de variation de la pression régnant dans la cellule du dispositif de la Fig.1, durant les phases d'injection et de relaxation, pour quatre roches différentes ;

- la Fig.4 montre le bon accord entre les perméabilités obtenues pour quatre particules de roche, par une méthode classique d'essai sur carottes et par la méthode selon l'invention ; et

- les Fig.5a à 5d montrent pour les quatre roches précédentes, la précision que l'on obtient dans l'ajustement des courbes de pression modélisées par rapport aux courbes expérimentales.

## DESCRIPTION DETAILLEE

Comme on l'a vu, la détermination de paramètres physiques de roches tels que leur perméabilité absolue par exemple, comporte essentiellement trois étapes :

I) une étape d'acquisition de mesures expérimentales des variations de pression à partir des débris de forage, donnant lieu à des courbes expérimentales ;

II) une étape de modélisation des phénomènes physiques intervenant au sein des débris de forage durant le même cycle opératoire, pour des valeurs arbitraires de paramètres physiques recherchés (perméabilité K) intervenant dans le modèle, permettant d'établir des courbes théoriques analogues ; et

III) une étape d'ajustement ou de calage où l'on détermine les valeurs à donner aux paramètres physiques intervenant dans le modèle pour que les courbes expérimentale et théorique s'ajustent au mieux.

### Acquisition des mesures

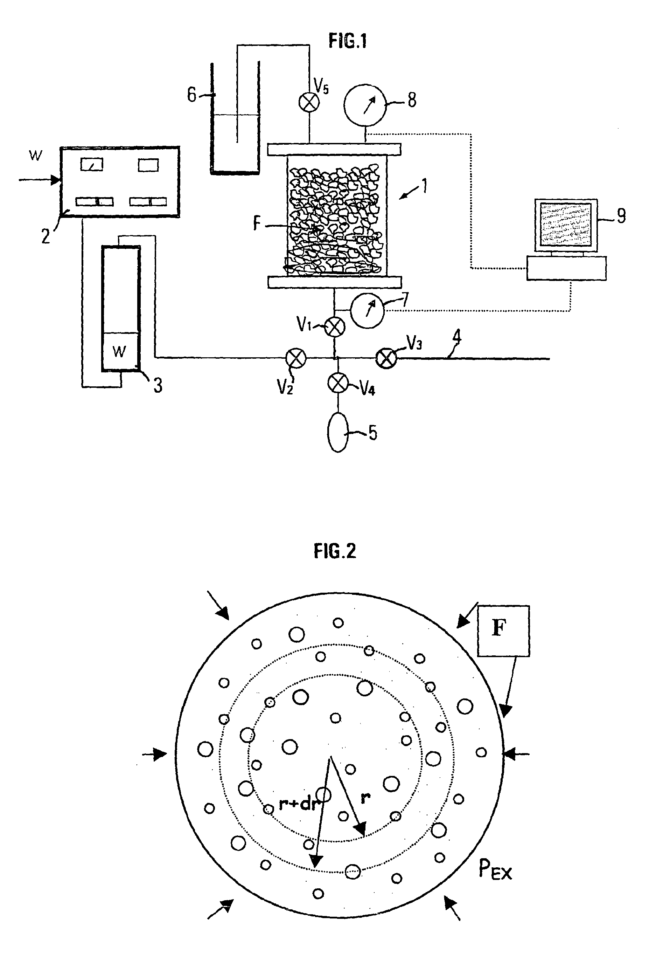

La première étape est réalisée au moyen d'un dispositif tel que celui schématisé à la Fig.1. Il comporte une cellule de confinement 1 dans laquelle sont initialement introduits les débris de forage. Une pompe à eau à débit constant 2 communique par une canalisation 3 avec la base d'un réservoir tampon 4 contenant de l'huile présentant une forte viscosité. L'extrémité opposée du réservoir tampon 4 communique avec une première extrémité de la cellule de confinement 1. Un ensemble de vannes V1 à V4 permet la mise en communication sélective de la cellule 1 avec le réservoir-tampon 3 contenant de l'huile et avec une ligne de purge 4, et son isolement. L'extrémité opposée de la cellule de confinement 1 communique par le biais d'une vanne d'isolement V5 avec un séparateur 6. Deux manomètres 7, 8 sont connectés respectivement avec les extrémités opposées de la cellule 1. Les variations de pression mesurées par les deux manomètres 7, 8 sont acquises par un ordinateur 9.

Dans un premier temps, on charge la cellule avec des débris de forage. Il peut s'agir de débris de forage tels qu'ils sont immédiatement disponibles sur le chantier c'est-à-dire envahis de boue de forage et de gaz libéré par la décompression.

On peut aussi utiliser des débris disponibles après nettoyage d'où tous les fluides ont été préalablement chassés. Dans le cas où l'on charge la cellule de confinement 1 avec des débris nettoyés, on injecte de l'hélium provenant d'une bouteille 5, de façon à chasser l'air de la cellule.

On remplit ensuite la cellule 1 avec une huile de forte viscosité. L'huile occupe l'espace libre entre les débris de forage et elle pénètre aussi par imbibition spontanée à l'intérieur de la roche. Il se produit un dégazage dont l'intensité et la durée dépend de la nature de la roche (principalement la porosité). Ce dégazage n'affecte qu'une partie du gaz. Un certain volume résiduel reste piégé dans les débris de forage sous forme d'amas déconnectés.

On procède ensuite à une injection d'huile (à débit d'injection constant par exemple de façon à mesurer facilement la quantité d'huile qui a pénétré dans les pores de la roche) avec une phase de montée graduelle de la pression (partie C1 de la courbe de pression) au fur et à mesure que le gaz résiduel piégé dans les pores est comprimé. Lorsque la pression atteint un certain seuil fixé $P_M$, on arrête l'injection d'huile. On assiste alors à une stabilisation. Les fluides tendent à se rééquilibrer dans le débris de forage et l'on observe une lente remise en équilibre de la pression (partie C2 de la courbe de pression).

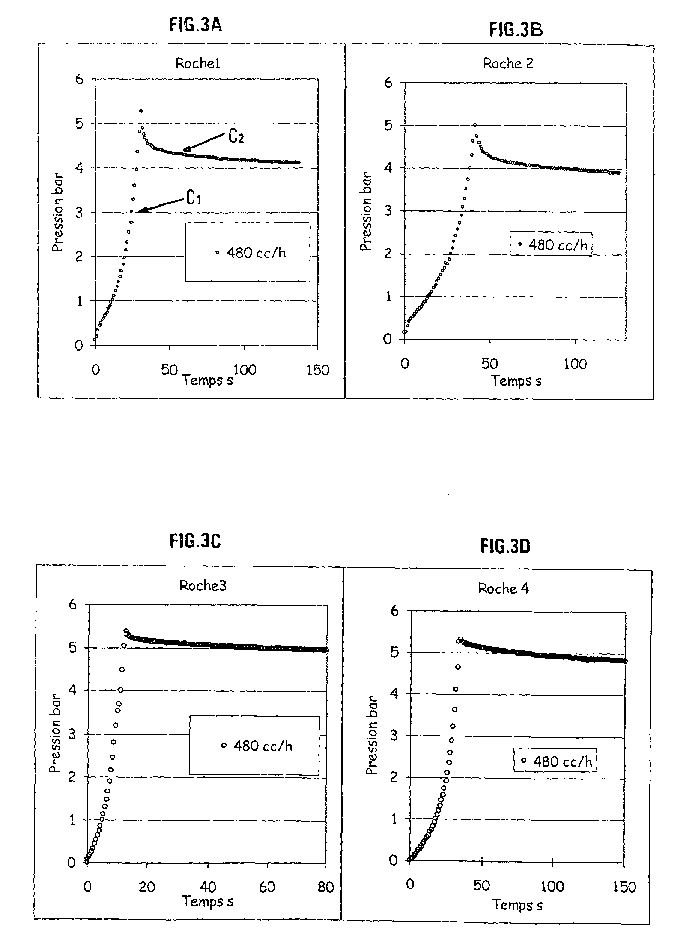

Les Fig.3a à 3d montrent des exemples d'évolution du signal de pression observé pour des débris de quatre roches différentes pour un débit de 480 cc/h. Quelle que soit la roche considérée, on observe la même évolution générale de la pression. On note une montée progressive pendant la phase d'injection à mesure que le gaz résiduel se comprime. Le temps requis pour augmenter la pression de 5 bars varie suivant les roches de 15 à 40 secondes selon le volume initial de gaz piégé. Dès que l'injection est stoppée, la pression diminue. Si cette diminution est significative pour les roches 1 et 2, elle reste plus modérée pour les roches 3 et 4. Aux temps longs, on observe une stabilisation graduelle du signal.

## II) Modélisation

Le but de cette modélisation est d'obtenir une estimation de la perméabilité K à partir des mesures de pression.

On considère que les débris de forage sont de taille homogène et de forme sphérique et que le gaz est supposé parfait. La perte de charge visqueuse du gaz est négligée par rapport à celle de l'huile compte tenu de l'écart entre les viscosités. Le gaz résiduel piégé dans les débris de roche après l'imbibition spontanée de l'huile se présente sous forme d'amas déconnectés répartis de manière homogène. On considère aussi que la pression capillaire est négligeable.

Compte tenu de la forme sphérique des débris, on va raisonner sur une calotte d'épaisseur dr (Fig.2), et calculer l'évolution de la pression à la frontière de la particule de roche lorsqu'un débit d'huile q est injecté.

On considère que les N particules de roche se partagent le débit total Q du fluide injecté de manière équitable, et que chacune reçoit le débit $q = \dfrac{Q}{N}$. La loi des gaz parfaits permet de déduire la saturation locale en gaz Sg dès lors qu'on connaît la pression P : $S_g = S_{g0} \dfrac{P_0}{P}$ ($P_0$ est la pression de l'huile). Dans la calotte, on fait un bilan matière sur l'huile. L'accumulation est égale à la différence entre ce qui rentre et ce qui sort. De là, on déduit :

$$ div\,\vec{V}_o + \phi \frac{\partial S_0}{\partial t} = 0 $$

Comme $S_o = (1 - S_g) = (1 - S_{g0} \dfrac{P_0}{P})$, on en déduit que :

$$ \frac{\partial S_o}{\partial t} = \frac{\partial S_o}{\partial P}\frac{\partial P}{\partial t} = \left( S_{g0}\frac{P_0}{P^2} \right)\frac{\partial P}{\partial t} $$

Comme par ailleurs, $\vec{V}_o = -\dfrac{K}{\mu_o}\,gr\bar{a}dP_0$ et que la pression capillaire peut être considérée comme négligeable ce qui fait donc que $P_o = P_{gaz} = P$, l'équation précédente s'écrit :

$$ -\frac{K}{\mu_o}\Delta P + \phi S_{g0}\frac{P_0}{P^2}\frac{\partial P}{\partial t} = 0 \; . $$

Il en résulte que

$$ \Delta P = \frac{\mu_o \phi S_{g0}}{K}\frac{P_0}{P^2}\frac{\partial P}{\partial t} $$

On obtient donc la forme classique d'une équation de type diffusion avec toutefois un terme en $1/P^2$ facteur de l'accumulation qui provient de la nature compressible du gaz.

En coordonnées sphériques, le Laplacien est égal à $\dfrac{1}{r^2}\dfrac{\partial}{\partial r}\left( r^2\dfrac{\partial P}{\partial r} \right)$. Finalement, l'équation à résoudre s'écrit :

$$\frac{\partial}{\partial r}\left(r^2\frac{\partial P}{\partial r}\right)=\alpha\,\frac{r^2}{P^2}\frac{\partial P}{\partial t} \qquad (1)$$

avec

$$\alpha=\frac{\mu_o\phi S_{g0}P_0}{K} \qquad (2)$$

Lors de sa mise en place, l'huile chasse l'air dans l'espace libre entre les débris de forage et pénètre dans la roche par imbibition spontanée. Malgré certaines précautions, il est possible qu'il reste un certain volume de gaz retenu à l'extérieur du fait de la forme non régulière des débris de forage. Ce volume piégé ($V_{gp}$) joue un rôle direct sur la forme générale de la réponse en pression et doit être pris en compte dans la résolution.

Il faut tenir compte également d'une certaine compressibilité due au dispositif expérimental. Elle provient aussi bien de la cellule, des lignes que des propriétés de l'huile. La compressibilité équivalente observée est de l'ordre de 0.0005 bar$^{-1}$.

Comme l'huile utilisée est saturée en gaz à pression atmosphérique, des phénomènes de dissolution se produisent lorsque la pression augmente au cours de la mesure. Ces aspects sont pris en compte en introduisant un paramètre de diffusion traduisant les échanges de molécules au niveau des interfaces gaz/huile.

L'équation de diffusion est résolue résolue par la méthode des différences finies avec un schéma explicite et en s'imposant les conditions aux limites en temps P(r,0)=P$_{atm}$ et en espace P(R,t)=P$_{ext}$ et $\frac{\partial P}{\partial r}(0,t)=0$. Le test de convergence sur P$_{ext}$ repose sur une comparaison entre la saturation de gaz restant dans la particule de roche et la valeur obtenue par bilan volumique à partir de la quantité d'huile injectée.

La résolution de l'équation de diffusion durant la période de relaxation est identique. Seule la condition de test change puisque l'arrêt de l'injection entraîne un maintien du volume de gaz dans la particule de roche.

## III) Ajustement du modèle aux résultats expérimentaux

Le modèle est implémenté dans un calculateur tel que l'ordinateur 9 (cf. Fig. 1) sous la forme d'un logiciel et inséré dans une boucle d'optimisation itérative. On fait « tourner » le modèle avec des valeurs choisies a priori de la perméabilité K, des facteurs $\Phi$ et $S_{g0}$ intervenant dans la relation 2 par leur produit, on compare la courbe de pression simulée qui en résulte avec la courbe expérimentale et par itérations successives en changeant les valeurs précédentes dans le modèle, on trouve celles qui permettent d'ajuster au mieux les courbes théorique et expérimentale.

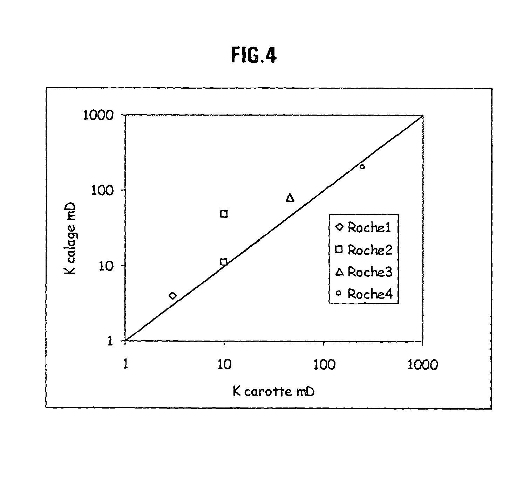

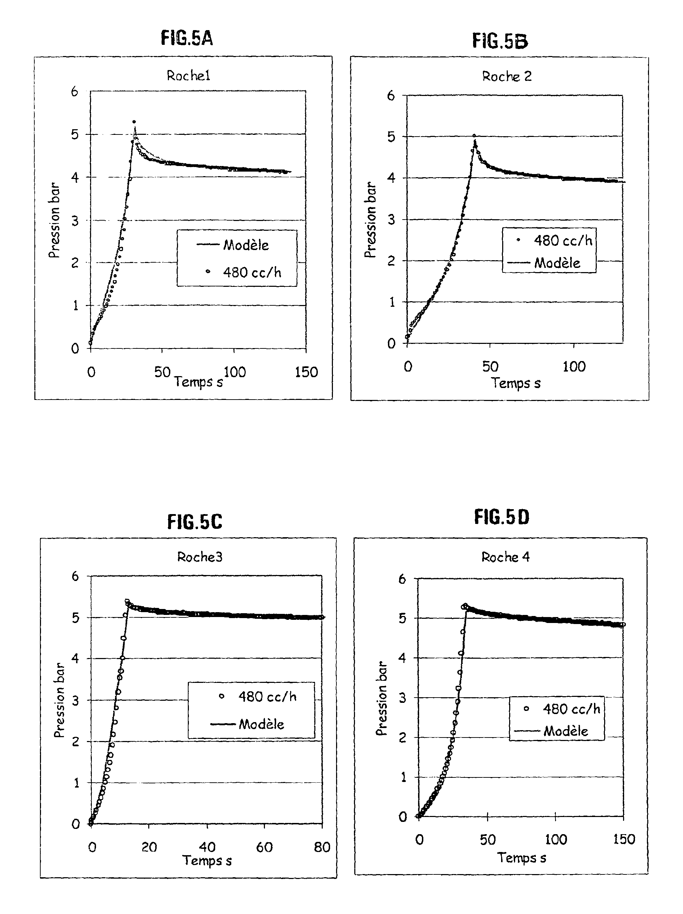

Les Fig. 5a à 5d montrent le bon accord que l'on obtient rapidement par itérations successives, entre les courbes théorique et expérimentale pour les quatre fragments de roche précédents. Comme le montre aussi la Fig.4, les résultats obtenus par application de la méthode sont tout à fait comparables pour les quatre roches, avec ceux obtenus en laboratoire après de longs délais de conditionnement par des méthodes classiques.

## Revendications

1. Méthode pour évaluer des paramètres physiques tels que leur perméabilité absolue de roches poreuses d'une zone d'un gisement souterrain, à partir de fragments prélevés dans cette zone, **caractérisée en ce qu'**elle comporte :

   - l'immersion des fragments (F) dans un fluide visqueux contenu dans une enceinte de confinement (1) ;
   - une phase d'injection dans l'enceinte de ce fluide sous une pression croissante en fonction du temps, jusqu'à un seuil de pression définie, de manière à comprimer le gaz piégé dans les pores de la roche ;
   - une phase de relaxation avec arrêt de l'injection ;
   - la mesure de l'évolution de la pression dans l'enceinte (1) au cours des deux phases d'injection et de relaxation ;

- une modélisation de l'évolution de la pression durant le processus d'injection et de relaxation, à partir de valeurs initiales choisies pour les paramètres physiques des fragments (F), et ;
- une étape d'ajustement itératif des valeurs des paramètres physiques des fragments de roche pour que l'évolution modélisée s'ajuste au mieux avec l'évolution mesurée de la pression dans l'enceinte.

**2.** Méthode selon la revendication 1, **caractérisée en ce que** l'on charge la cellule de confinement avec des débris de forage envahis de fluides de forage.

**3.** Méthode selon la revendication 1, **caractérisée en ce que** l'on charge la cellule de confinement avec des débris de forage préalablement nettoyés.

**4.** Dispositif pour évaluer des paramètres physiques de roches poreuses d'une zone d'un gisement souterrain, tels que leur perméabilité absolue, à partir de fragments de roche prélevés dans cette zone, **caractérisé en ce qu'**il comporte

- une enceinte de confinement (1) pour des fragments (F) de roche poreuse ;
- des moyens (2,3) d'injection d'un fluide visqueux dans l'enceinte (1) pour, dans un premier temps, remplir l'enceinte contenant les fragments de roche et pour, dans un deuxième temps, réaliser un cycle comprenant une phase d'injection du fluide dans l'enceinte sous une pression croissante en fonction du temps, jusqu'à un seuil de pression définie($P_M$), de manière à comprimer le gaz piégé dans les pores de la roche, et une phase de relaxation avec arrêt de l'injection ;
- des moyens (7,8) pour la mesure de l'évolution de la pression dans l'enceinte (1) au cours des deux phases d'injection et de relaxation ; et
- un système de traitement de données (9) pour modéliser l'évolution de la pression durant le processus d'injection et de relaxation, à partir de valeurs initiales choisies pour les paramètres physiques des fragments de roche, et pour ajuster itérativement les valeurs à donner à ces paramètres physiques pour que l'évolution modélisée de la pression s'ajuste au mieux avec l'évolution mesurée de la pression dans l'enceinte.

**5.** Dispositif selon la revendication 4, **caractérisé en ce que** les moyens d'injection comportent une pompe (2) injectant de l'eau à débit constant dans un réservoir tampon (3) rempli d'huile à forte viscosité.

**Claims**

**1.** **Method for evaluating physical parameters such as absolute** permeability, of porous rocks in an underground deposit region, from fragments sampled from this region, **characterized in that** it involves:

- immersing fragments (F) in a viscous fluid contained in a confinement chamber (1);
- a phase of injecting this fluid into the chamber under a pressure that increases as a function of time, up to a predetermined pressure threshold, so as to compress the gas trapped in the pores of the rock;
- a relaxation phase where injection is stopped;
- measuring the change in pressure in the chamber (1) during the two phases: injection and relaxation;
- modelling the change in pressure during the injection and relaxation process on the basis of initial values chosen for the physical parameters of the fragments (F), and;
- a step involving iterative adjustment of the values of the physical parameters of the rock fragments to make the modelled change best fit the measured change in pressure in the chamber.

**2.** Method according to Claim 1, **characterized in that** the confinement cell is loaded with drilling debris containing drilling fluids.

**3.** Method according to Claim 1, **characterized in that** the confinement cell is loaded with drilling debris that has been cleaned beforehand.

**4.** Device for evaluating physical parameters of porous rocks of an underground deposit region such as absolute permeability, from rock fragments sampled from this region, **characterized in that** it comprises:

- a confinement chamber (1) for porous rock fragments (F);
- means (2, 3) of injecting a viscous fluid into the chamber (1) in order, firstly, to fill the chamber containing the rock fragments and, secondly, to carry out a cycle comprising a phase of injecting fluid into the chamber under a pressure that increases as a function of time up to a predetermined pressure threshold ($P_M$) so as to compress the gas trapped in the pores of the rock, and a relaxation phase where injection is stopped;
- means (7, 8) for measuring the change in pressure in the chamber (1) during the two phases: injection and relaxation; and
- a data processing system (9) for modelling the change in pressure during the injection and relaxation process, on the basis of initial values chosen for the physical parameters of the rock fragments and for iteratively adjusting the values to be assigned to these physical parameters in order for the modelled change in pressure to best fit the measured change in pressure in the chamber.

5. **Device according to Claim 4, characterized in that the** injection means comprise a pump (2) injecting water at constant flow rate into a buffer reservoir (3) filled with high-viscosity oil.

**Patentansprüche**

1. Verfahren zur Auswertung der physikalischen Parameter, wie etwa der absoluten Permeabilität, von porösem Felsgestein einer unterirdischen Lagerstätte, ausgehend von Fragmenten, die aus dieser Zone entnommenen wurden, **dadurch gekennzeichnet, dass** es umfasst:

   - Eintauchen der Fragmente (F) in ein viskoses Fluid, das in einem Einschlussbehälter (I) enthalten ist;
   - eine Phase der Einspeisung dieses Fluids in den Behälter unter einem mit der Zeit bis zu einer definierten Druckschwelle ansteigendem Druck, um das Gas zu verdichten, das in den Poren des Felsgesteins gefangen ist;
   - eine Phase der Entspannung mit Einspeisestopp;
   - Messen der Druckentwicklung in dem Behälter (1) während der beiden Phasen, der Einspeisephase und der Entspannungsphase;
   - Modellierung der Druckentwicklung während des Einspeise- und des Entspannungsvorgangs, ausgehend von Anfangswerten, die für die physikalischen Parameter der Fragmente (F) ausgewählt wurden, und;
   - ein Schritt der iterativen Anpassung der Werte der physikalischen Parameter der Felsgesteinsfragmente, damit sich die modellisierte Entwicklung bestmöglich an die gemessene Druckentwicklung in dem Behälter anpasst.

2. Verfahren nach Anspruch 1, **dadurch gekennzeichnet, dass** die Einschlusszelle mit Bohrabfällen gefüllt wird, die von Bohrfluiden durchdrungen sind.

3. Verfahren nach Anspruch 1, **dadurch gekennzeichnet, dass** die Einschlusszelle mit Bohrabfällen gefüllt wird, die zuvor gereinigt wurden.

4. Vorrichtung zur Auswertung der physikalischen Parameter von porösem Felsgestein aus einer unterirdischen Lagerstätte, wie etwa deren absolute Permeabilität, ausgehend von Fragmenten, die aus dieser Zone entnommenen wurden, **dadurch gekennzeichnet, dass** sie umfasst:

   - einen Einschlussbehälter (1) für die Fragmente (F) des porösen Felsgesteins;
   - Mittel (2, 3) zur Einspeisung eines viskosen Fluids in den Behälter (1), um zuerst den Behälter, der die Felsgesteinfragmente enthält, zu füllen und um dann einen Zyklus zu realisieren, der, um das Gas zu verdichten, das in den Poren des Felsgesteins gefangen ist, eine Phase der Einspeisung des Fluids in den Behälter unter einem mit der Zeit bis zu einem definierten Schwellendruck ($P_M$) ansteigenden Druck, und eine Phase der Entspannung mit einem Einspeisestopp umfasst;
   - Mittel (7, 8) zum Messen der Druckentwicklung in dem Behälter (1) während der beiden Phasen, der Einspeisephase und der Entspannungsphase; und
   - ein System zur Verarbeitung von Daten (9), um die Druckentwicklung während des Einspeise- und des Entspannungsvorgangs zu modellieren, ausgehend von Anfangswerten, die für die physikalischen Parameter des Felsgesteins ausgewählt wurden, und um die Werte iterativ anzupassen, die diesen physikalischen Parameter zugeordnet werden, damit sich die modellierte Druckentwicklung bestmöglich an die Entwicklung angepasst, die für den Druck im Behälter gemessen wird.

5. Vorrichtung nach Anspruch 4, **dadurch gekennzeichnet, dass** die Mittel zur Einspeisung eine Pumpe (2) umfassen, die Wasser mit einer konstanten Durchflussmenge in einen Puffertank (3) einspeist, der mit stark viskosem Öl gefüllt ist.

# FIG.1

# FIG.2

### FIG.3A

### FIG.3B

### FIG.3C

### FIG.3D

# FIG.4

## FIG.5A

Roche1

## FIG.5B

Roche 2

## FIG.5C

Roche3

## FIG.5D

Roche 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2772483 A

**Littérature non-brevet citée dans la description**

- **SANTARELLI F.J. et al.** Formation evaluation from logging on cuttings. *SPERE,* Juin 1998
- **MARSALA A.F. et al.** Transient Method Implemented under Unsteady State Conditions for Low and Very Low Permeability Measurements on Cuttings. *SPE/ISRM,* 08 Juillet 1998, (47202
- **NIGH E. et al.** P-K™: Wellsite Determination of Porosity and Permeability Using Drilling Cuttings. *CWLS Journal,* Décembre 1984, vol. 13 (1